# EUROPÄISCHE PATENTSCHRIFT

(11) **EP 0 808 786 B1**
(45) Veröffentlichungstag und Bekanntmachung des Hinweises auf die Patenterteilung: **06.06.2001**
(21) Anmeldenummer: 97103584.5
(22) Anmeldetag: 05.03.1997
(51) Int. Cl.: B65G 47/54

(54) **Hubvorrichtung für Rollenschienen von Rollentischen**
Lifting apparatus for the roller rails of roller tables
Dispositif de soulèvement pour rails de roulement de tables à rouleaux

(30) Priorität: 21.05.1996 DE 19620493
(43) Veröffentlichungstag der Anmeldung: 26.11.1997
(73) Patentinhaber: Holzma-Maschinenbau GmbH, 75365 Calw-Holzbronn (DE)
(72) Erfinder: Jenkner, Erwin, 71083 Herrenberg-Oberjesingen (DE)
(74) Vertreter: Dreiss, Fuhlendorf, Steimle & Becker

(56) Entgegenhaltungen:
- DE-A- 4 233 082
- FR-A- 2 401 082
- US-A- 4 109 781
- US-A- 4 696 386
- US-A- 5 170 558

## Beschreibung

Die Erfindung betrifft eine Hubvorrichtung für Rollentische, insbesondere für die Winkelübergabe von plattenförmigen Materialien von einer ersten auf eine zweite, im rechten Winkel dazu angeordnete Fördereinrichtung, gemäss dem Oberbegriff des Patentanspruchs 1.

Für den Transport von plattenförmigen Materialien, wie einzelne Werkstückplatten oder Plattenstapel, werden in der Regel Rollentische verwendet. Diese bestehen beispielsweise aus einzelnen Rollenschienen, die im Baukastensystem zusammengesetzt werden, so dass sich Rollentische beliebiger Grösse aufbauen lassen.

Für das Handling von grossformatigen Platten können dabei Rollentische mit Auflageflächen von 3 m x 7 m oder noch grösser benötigt werden.

Wenn Platten, die auf einer ersten Fördereinrichtung verschoben werden, im rechten Winkel zu ihrer bisherigen Verschieberichtung auf einer zweiten Fördereinrichtung weiterbewegt werden müssen, so ist hierfür ein Winkelübergabe-Rollentisch erforderlich, bei dem die Rollenebene für die im rechten Winkel abgehende Richtung tiefer liegt als die Rollenebene für die ankommende Richtung. Derartige Winkelübergabetische werden z.B. bei Buntaufteilsägenanlagen zwischen der Längs- und Queraufteilsäge oder bei Platten bzw. Plattenstapelverteilanlagen eingesetzt. Für einen derartigen Winkelübergabe-Rollentisch, wie er z.B. aus der DE 40 38 516 A1 bekannt ist, werden abwechselnd Längs- und Querrollenschienen verwendet, also Rollenschienen, bei denen die Rollen einmal in Längsrichtung und einmal in Querrichtung drehen.

Um die Winkelübergabe von plattenförmigen Materialien durchzuführen, ist es erforderlich, dass die unterschiedlichen Rollenschienen gegeneinander in der Höhe verschoben werden können, wobei insbesondere das von den Rollenschienen für die ankommende Richtung gebildete Rollenbett, nachdem entsprechende, plattenförmige Materialien darauf angeordnet sind, zur Übergabe an die Rollenschienen bzw. das Rollenbett der abgehenden Richtung abgesenkt wird. Hierfür müssen die heb- und senkbar angeordneten Rollen oder Rollenschienen auf einem stabilen Rahmen montiert werden, der mindestens an seinen vier Eckpunkten durch senkrechte Führungen mit entsprechenden Parallelausgleichseinrichtungen zur gleichmässigen Auf- und Abbewegung ausgestattet wird (vgl. DE-A-1 481 343). Derartige Konstruktionen ermöglichen es zwar, plattenförmige Materialien mit empfindlichen Oberflächen ohne Beschädigung der Oberfläche aus ihrer ursprünglichen Vorschubrichtung durch Absenken der entsprechenden Rollenschienen problemlos im rechten Winkel abgehend weiterzubefördern, jedoch sind damit immer sehr aufwendige Konstruktionen erforderlich.

Aus DE 42 33 082 A1 ist aber bereits eine konstruktiv vereinfachte Hubvorrichtung für Rollenschienen von Rollentischen mit den Merkmalen des Oberbegriffs des Anspruches 1 bekannt, die eine gleichmässige Hubbewegung des durch Rollenschienen gebildeten Rollenbettes sicherstellt sowie Rollentische in beliebiger Grösse ggf. mit Winkelübergabe herzustellen gestattet.

Hierzu sind die Rollen des heb- und senkbaren Rollenbettes nicht an einem Rahmen, sondern an einzeln am Tischgestell höhenverstellbar gelagerten Rollenschienen angeordnet. Die Führungsanordnungen zur Lagerung der Rollenschienen am Tischgestell ermöglichen es dabei, eine auf die Rollenschienen gerichtete horizontale Stellkraft, in eine Hubkraft umzusetzen.

Auf diese Weise lassen sich anheb- und absenkbare Rollenbetten für den Transportrichtungswechsel von Platten oder Plattenstapeln aus einzelnen Rollenschienen mit einander entsprechend zugeordneten Rollen aufbauen und in einen Rollentsich integrieren.

Die Hubbewegung der einzelnen Rollenschienen wird hierbei durch Führungsanordnungen erzielt, die auf beiden Seiten der Rollenschienen in Schienenlängsrichtung im Abstand voneinander gestellfest angebrachte Führungskeile zur Bildung von schrägen Führungsflächen aufweisen. Die Rollenschienen ruhen mit an jeder Schienenlängsseite gelagerten Abstützrollen auf jeweils einem der seitlich vorgesehenen Führungskeile auf und sind über eine Verbindungsleiste in seitlicher Richtung miteinander starr verbunden.

Ausgehend von dieser bekannten Hubvorrichtung liegt der Erfindung die Aufgabe zugrunde, deren konstruktiven Aufwand erheblich zu verringern.

Diese Aufgabe wird erfindungsgemäss durch die kennzeichnenden Merkmale des Anspruchs 1 gelöst.

Bei der erfindungsgemässen Konstruktion bilden somit die beiden Quertraversen zugleich jeweils eine Komponente der beiden Führungsanordnungen, indem sie durch deren pultartig geformten Querschnitt zugleich eine über deren Länge durchgehend schräge Führungsfläche aufweisen, die für sämtliche Rollenschienen die Umsetzung ihrer gemeinsamen Längsbewegung in eine Hubbewegung übernimmt. Auf die paarweise Anordnung von speziell herzustellenden und auf die Quertraversen zu montierenden, stationären Führungskeilen für jede Rollenschiene kann somit verzichtet werden. Des weiteren bildet eine der beiden Quertraversen zugleich eine starre, gegenseitige, seitliche Verbindung aller heb- und senkbaren Rollenschienen so dass auf die Anordnung spezieller, zusätzlicher Schienenverbindungsmittel verzichtet werden kann.

Schließlich bietet die gegenseitige Verbindung der Rollenschienen mit der einen Quertraverse den Vorteil, dass für die Umsetzung der Längsbewegung der Rollenschienen in eine Hubbewegung lediglich noch zwei in seitlichem Abstand voneinander gestelltfest gelagerte Abstützrollen benötigt werden, auf denen die Quertraverse mit ihrer Schrägfläche auf ruht.

Die feste Verbindung zwischen Quertraverse und Rollenschienen bietet überdies den Vorteil, diese Quertraverse gemäss Anspruch 2 auch für den Kraftangriff einer die anhebe- und absenkbaren Rollenschienen zur Hubdurchführung in Längsrichtung verstellenden Betätigungsvorrichtung einsetzen zu können.

Die erfindungsgemässe Hubvorrichtung kann für Maschinentische eingesetzt werden, deren Tischniveau lediglich über einen vorbestimmten Bereich in der Höhe stufenlos verstellbar sein soll.

In erster Linie ist sie jedoch für Rollentische konzipiert, deren heb- und senkbare Rollenschienen jeweils zwischen zwei stationären Rollenschienen angeordnet und sowohl über als auch unter das durch die Rollen der stationären Rollenschienen definierte Tischniveau steuerbar sind.

In der Zeichnung ist ein Ausführungsbeispiel eines erfindungsgemäßen Rollentisches dargestellt. Es zeigen:
- Fig. 1: einen Querschnitt des Rollentisches entlang der Linie I-I der Fig. 2;
- Fig. 2: einen Längsschnitt des Rollentisches entlang der Linie II-II der Figur 1.

Der gezeigte Rollentisch für die Winkelübergabe von Plattenmaterial weist eine Gruppe von Rollenschienen 10 auf, die in horizontaler Anordnung in seitlichem Abstand zueinander parallel und auf einem Tischgestell 12 ortsfest vorgesehen sind. Jede dieser Rollenschienen 10 trägt eine Vielzahl von Querrollen 14, deren Drehachse 16 parallel zur Schienenlängsrichtung liegt.

Eine auf den Querrollen 14 dieser ersten Gruppe von Rollenschienen 10 aufliegende Platte oder ein Plattenstapel lässt sich somit in Richtung des Pfeiles A oder entgegengesetzt hierzu über den Rollentisch bewegen.

Zwischen den ortsfesten Rollenschienen 10 ist jeweils eine mit Längsrollen 18 ausgestattete Rollenschiene 20 einer zweiten Schienengruppe angeordnet, die mittels als Ganzes mit 22 und 24 bezeichneten Führungsanordnungen auf dem Tischgestell 12 heb- und senkbar geführt sind. Die Drehachsen der Längsrollen 18 sind hierbei senkrecht zur Schienenlängsrichtung orientiert.

Eine auf dieser zweiten Schienengruppe aufliegende Platte oder ein Plattenstapel lässt sich somit in Richtung des Pfeiles B über den Rollentisch bewegen.

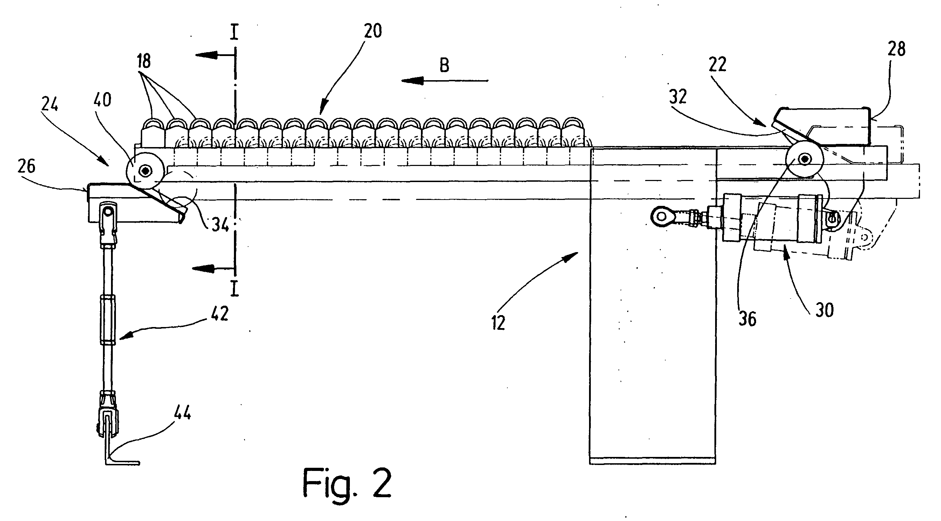

Die Rollenschienen 10 und 20 beider Schienengruppen sind an ihrem gemäss Fig. 2 linken Schienenende gemeinsam von einer horizontalen Quertraverse 26 abgestützt, während sie an ihrem anderen Schienenende auf dem Tischgestell 12 unterschiedlich aufgenommen sind. Dabei wurde einfachheitshalber auf die Darstellung der Aufnahme der ortsfesten Rollenschienen 10 der ersten Schienengruppe in diesem Bereich auf dem Tischgestell 12 verzichtet, da im vorliegenden Falle lediglich die Anordnung und Führung der heb- und senkbaren Rollenschienen 20 der zweiten Schienengruppe von Interesse ist.

Während die Rollenschienen 10 der ersten Schienengruppe auf der Quertraverse 26 endseitig festgelegt sind, sind diejenigen der zweiten Schienengruppe auf dieser Quertraverse 26 mit ihrem einen Schienenende längsverschiebbar abgestützt, und mit ihrem anderen Schienenende an einer weiteren, die Rollenschienen 20 fest miteinander verbindenden Quertraverse 28 befestigt. An letzterer ist zugleich eine vorzugsweise durch ein Zylinder-Kolbenaggregat gebildete, am Tischgestell 12 abgestützte Betätigungsvorrichtung 30 zur gemeinsamen Verstellung der Rollenschiene 20 in Schienenlängsrichtung angelenkt.

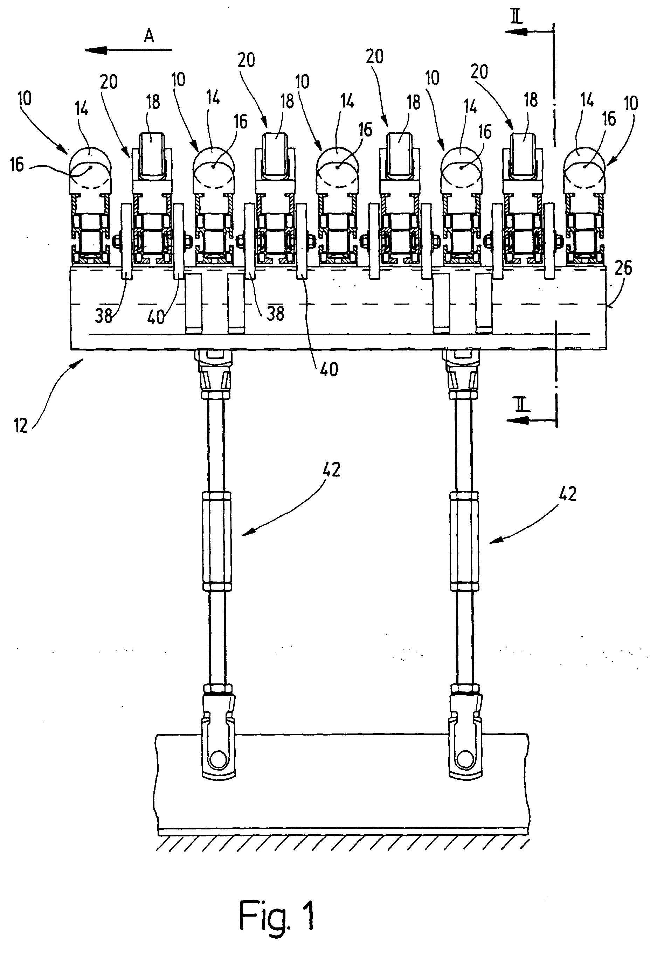

Entsprechende Verstellbewegungen der Rollenschienen 20 werden durch die beiden Führungsanordnungen 22 und 24 in gleichgerichtete Hubbewegungen der Rollenschienen 20 umgesetzt, so dass diese aus einer in Fig. 1 gezeigten oberen Lage in eine in Fig. 2 gestrichelt angedeutete untere Lage verlagert werden.

In der oberen Schienenendlage (Fig. 1) überragen die Längsrollen 18 die Querrollen 14, während sie sich in der unteren Schienenendlage unterhalb derselben befinden.

Wird z.B. eine Platte auf die Querrollen 14 der ersten Gruppe von Rollenschienen 10 aufgeschoben und werden anschliessend die die Längsrollen 18 tragenden Rollenschienen 20 aus ihrer unteren Stellung in ihre obere Stellung gesteuert, so heben diese die Platte von den Querrollen 14 ab, so dass die Platte schliesslich nur auf den Längsrollen 18 aufliegt und demgemäss im rechten Winkel zu ihrer Anlieferrichtung weiterbewegt werden kann.

Zur Hubsteuerung der zweiten Gruppe von Rollenschienen 20 übernehmen die beiden Quertraversen 26 und 28 Führungsfunktion und bilden somit zugleich jeweils eine Komponente der Führungsanordnungen 22 und 24. Sie sind dazu mit jeweils einer sich in deren Längsrichtung erstreckenden, quer zur Traversenlängsrichtung schräg ansteigenden Führungsfläche 32 bzw. 34 ausgestattet, die zueinander parallel verlaufen und bei einer Schienenlängsverschiebung durch die Betätigungsvorrichtung 30 deren Umsetzung in eine Schienenhubbewegung bewirken.

Während hierzu die Quertraverse 28 mit ihrer Führungsfläche 32 auf zwei oder mehr gestellfest gelagerten Stützrollen 36 aufruht, sind die Rollenschienen 20 an ihrem der Quertraverse 26 zugekehrten Ende mit vorzugsweise beidseitig gelagerten Stützrollen 38, 40 auf der Führungsfläche 34 der Quertraverse 26 abgestützt.

Mit 42 sind als Ganzes an der Quertraverse 26 unterseitig angelenkte, längenveränderliche Zuganker bezeichnet, die mit ihrem unteren Ende an einer auf der Tischaufstellfläche festgelegten Ankerschiene 44 befestigbar sind. Mit ihrer Hilfe lassen sich vor allem sehr lange Quertraversen 26 exakt horizontal ausrichten und ebenso an diesen endseitig aufgenommene Längsträger eines sich an den Rollentisch anschliessenden, weiteren Rollentisches in der Höhe exakt ausrichten.

## Patentansprüche

1. Hubvorrichtung für Rollentische, insbesondere für die Winkelübergabe von plattenförmigen Materialien von einer ersten auf eine zweite, im rechten Winkel dazu angeordnete Fördereinrichtung, mit einer Vielzahl von Rollenschienen (20), die auf einem Tischgestell (12) parallel zueinander angeordnet, in seitlicher Richtung fest miteinander verbunden und gemeinsam heb- und senkbar sind, welche Hubvorrichtung zwei in Längsrichtung der Rollenschienen (20) im Abstand voneinander vorgesehene, die Rollenschiene gemeinsam abstützende Quertraversen (26, 28) aufweist, die jeweils eine Führungsanordnung (22 bzw. 24) aufweisen, durch die die Rollenschienen (20) bei deren gemeinsamen Verstellung durch eine Betätigungsvorrichtung (30) in Schienenlängsrichtung zugleich parallel zu sich selbst heb- bzw. senkbar geführt sind, und diese Führungsanordnungen (22, 24) jeweils eine sich in Schienenlängsrichtung erstreckende und quer zu dieser in gleicher Richtung schräg ansteigende Führungsfläche (32 bzw. 34) aufweisen, die jeweils mit einem entlang derselben verstellbaren Folgerglied (36 bzw. 38) in Eingriff stehen, wobei jeweils der eine der beiden Teile (32 bzw. 34 oder 36 bzw. 38) der Führungsanordnungen (22, 24) an einer der Quertraversen (26 bzw. 28) und der andere schienenseitig vorgesehen ist, **dadurch gekennzeichnet,** dass die Quertraversen (26, 28) über ihre Länge durch im Querschnitt in etwa pultartig geformte Blechprofile gebildet sind, dass über die eine der beiden Quertraversen (26, 28) die Rollenschienen (20) im Bereich ihres einen Schienenendes fest miteinander verbunden sind, dass die schräge Führungsfläche (32) dieser Quertraverse (28) auf gestellfest gelagerten Abstützrollen (36) aufruht und dass die Rollenschienen (20) mit im Bereich ihres anderen Schienenendes gelagerten Abstützrollen (38, 40) auf der schrägen Führungsfläche (34) der anderen Quertraverse (26) aufruhen.

2. Hubvorrichtung nach Anspruch 1, dadurch gekennzeichnet, dass die Betätigungsvorrichtung (30) ein Zylinder-Kolbenaggregat ist, das einerseits am Tischgestell (12) und andererseits an der auf Abstützrollen (36) des Tischgestells (12) abgestützten, die Rollenschienen (20) in seitlicher Richtung starr miteinander verbindenden Quertraverse (28) angelenkt ist.

3. Hubvorrichtung nach Anspruch 1 oder 2, dadurch gekennzeichnet, dass die heb- und senkbaren Rollenschienen (20) jeweils zwischen zwei stationären Rollenschienen (10) angeordnet und sowohl über als auch unter das durch die Rollen (14) der stationären Rollenschienen (10) definierte Tischniveau steuerbar sind.

## Claims

1. A lifting apparatus for roller tables, in particular for the angle transfer of plate-shaped materials from a first to a second conveyor facility arranged at a right angle to it, with numerous roller rails (20) which are arranged parallel to each other on a table frame (12), are solidly connected with one another in the lateral direction and can be lifted and lowered together, which lifting apparatus having two envisaged cross traverses (26, 28) in the longitudinal direction of the roller rails (20), with a clearance from one another and jointly supporting the roller rail, these said cross traverses having a guiding arrangement (22 and 24 respectively) by means of which the roller rails (20), upon joint adjustment of same by means of an actuation apparatus (30) in the rail longitudinal direction, being positioned at the same time in parallel to each other and are raisable and depressable, respectively, and these guiding arrangements (22, 24) each having an inclined and rising guiding surface (32 and 34, respectively) ranging in the rail longitudinal direction and transverse to this in the same direction, each being engaged with an adjustable sequence element (36 and 38, respectively) along the same where, in each case, one of the two parts (32 and/or 34, or 36 and/or 38) of the guiding arrangements (22, 24) is envisaged on one of the cross traverses (26 and 28, respectively) and the other on the rail side, **thus characterised** that the cross traverses (26, 28) over their length are formed by sheet metal profiles, in the cross-section in a somewhat stepped grated fashion, that, by way of one of the two cross traverses (26, 28), the roller rails (20) are solidly connected with one another in the zone of one of their rail ends, that the inclined guiding surface (32) of this cross traverse (28) is resting frame-solidly on bearing-located supporting rollers (36) and that the roller rails (20) are resting with the bearing-located supporting rollers (38, 40) in the zone of their other rail end on the inclined guiding surface (34) of the other cross traverse (26).

2. A lifting apparatus according to Claim 1, thus characterised that the actuation apparatus (30) is a cylinder-piston aggregate which is hinged to the table frame (12) as well as being hinged to the cross traverse (28), supported on supporting rollers (36) of the table frame (12) and rigidly connecting the roller rails (20) with one another in the lateral direction.

3. A lifting apparatus according to Claim 1 or 2, thus characterised that the raisable and depressable roller rails (20) are each arranged between two stationary roller rails (10) and are controllable not only over but also under the table level as defined by the rollers (14) of the stationary roller rails (10).

## Revendications

1. Dispositif de levage pour tables à rouleaux, en particulier pour le transfert en angle de matériaux en forme de plaques à partir d'un premier convoyeur vers un deuxième convoyeur disposé à angle droit par rapport au premier, comportant une pluralité de rails de roulement (20) disposés parallèlement les uns aux autres sur un châssis de table (12), reliés les uns aux autres de manière fixe selon une direction latérale et qui peuvent être soulevés et abaissés ensemble, ledit dispositif de levage comportant deux barres transversales (26, 28) disposées à distance l'une de l'autre selon la direction longitudinale des rails de roulement (20), qui supportent ensemble les rails de roulement (20) et qui comportent chacune un dispositif de guidage (22, respectivement 24) au moyen duquel les rails de roulement (20) sont guidés en même temps parallèlement à eux-mêmes en levage ou en abaissement dans la direction longitudinale des rails lors de leur déplacement commun commandé par un dispositif d'actionnement (30), dans lequel ces dispositifs de guidage (22, 24) comportent chacun une surface de guidage (32, respectivement 34) qui s'étend dans la direction longitudinale des rails, qui s'élève obliquement dans le même sens selon une direction perpendiculaire à la direction longitudinale des rails et qui se trouve, à chaque fois, en engagement avec un élément suiveur (36, respectivement 38) qui peut être déplacé le long de la surface de guidage et dans lequel, à chaque fois, une des deux parties (32, respectivement 34 ou 36, respectivement 38) des dispositifs de guidage (22, 24) est prévus sur l'une des barres transversales (26, respectivement 28) et l'autre partie est prévue du côté des rails, **caractérisé en ce que** les barres transversales (26, 28) sont constituées, sur leur longueur, de profilés en tôle ayant en section sensiblement un profil en pente unique, en ce que les rails de roulement (20) sont reliés entre eux de manière fixe dans la zone d'une de leurs extrémités par l'intermédiaire de l'une des deux barres transversales (26, 28), en ce que la surface de guidage oblique (32) de cette barre transversale (28) repose sur des rouleaux supports (36) qui sont montés de manière fixe sur le châssis et en ce que les rails de roulement (20) reposent, par l'intermédiaire de rouleaux d'appui (38, 40) montés dans la zone de leur autre extrémité de rail, sur la surface de guidage oblique (34) de l'autre barre transversale (26).

2. Dispositif de levage selon la revendication 1, caractérisé en ce que le dispositif d'actionnement (30) est un appareil à piston et cylindre monté à articulation sur le châssis de table (12), d'une part, et sur la barre transversale (28) qui repose sur les rouleaux supports (36) du châssis de table (12), d'autre part, et qui relie les rails de roulement (20) de manière rigide entre eux dans la direction latérale.

3. Dispositif de levage selon la revendication 1 ou 2, caractérisé en ce que les rails de roulement (20) qui peuvent être levés et abaissés sont disposés, à chaque fois, entre deux rails de roulement fixes (10) et peuvent être commandés pour aller aussi bien au-dessus qu'au-dessous du niveau de la table défini par les rouleaux (14) des rails de roulement fixes (10).
